# EUROPEAN PATENT SPECIFICATION

(11) **EP 1 642 067 B1**
(45) Date of publication and mention of the grant of the patent: **13.02.2013**
(21) Application number: 04749270.7
(22) Date of filing: 23.06.2004
(51) Int. Cl.: F24D 11/00, F23D 11/40, F28D 20/00

(54) **CENTRAL HEATING SYSTEM FOR PREMISES AND SANITARY WATER**
ZENTRALHEIZUNGSSYSTEM FÜR GEBÄUDE UND SANITÄRWASSER
SYSTEME DE CHAUFFAGE CENTRAL POUR LOCAL ET EAU CHAUDE SANITAIRE

(30) Priority: 27.06.2003 SI 200300159
(43) Date of publication of application: 05.04.2006
(73) Proprietor: Stroj, Franc, 4275 Begunje (SI)
(72) Inventor: Stroj, Franc, 4275 Begunje (SI)
(74) Representative: Pipan, Marjan
(86) International application number: PCT/SI2004/000024
(87) International publication number: WO 2005/001343

(56) References cited:
- WO-A-97/41395

## Description

The invention involves a central heating system for premises and sanitary water that includes a combined central heating furnace with two combustion chambers and allowing for simple mounting of an additional accumulation-type exchangeable insert, with an immersive heat accumulator - sanitary water boiler and with a solar collector system, including appropriate links for connection of an open central heating system. The invention has been classified into class F 24 H 1/22 of the International Patent Classification.

The technical problem successfully solved by the respective invention involves the design and the implementation of the central heating system and furnace that will enable simultaneous central heating of premises as well as preparation of sanitary water by combining liquid fuels, gaseous fuels or fuels of biological origin through simple links and most reasonable implementation of the system along with the least possible environment pollution, simple connection and cleaning as well as additional improvements additionally contributing to better utilization rate and lower environment pollution.

The central heating systems that include more or less combined central heating furnaces in principle involve the deficiency that the system is subordinated to the primary application mode of the furnace itself. With liquid fuel furnaces the combustion chambers are predominantly small, while the sanitary water boilers either make part of the furnace or double petty-coat boilers are connected to the furnace. With solar heating systems or thermal pumps the shape and the position of the combustion chamber opposite the sanitary water boiler actually prevent reasonable operation of e.g. only central heating and/or only sanitary water heating. Moreover, the central heating furnaces solving the imposed technical problem in terms of optimum utilization rate of the caloric value of solid, gaseous or liquid fuels have their combustion chambers shaped more or less unsuccessfully. The most usual design of the combustion chamber is a square unit with a water cooled grid or ordinary grid at the bottom, while the upper part is shaped as a chimney flue leading to the smoke box that in turn leads to the smoke tube connection. In view of better utilization rate of the furnace the combustion chamber includes particular shiftings, filled with heating water, that sometimes drive the smoke gases downwards and cause trouble with the furnace draught.

In standard versions of systems and furnaces, sanitary water connections, hot water connections and return of cold water with the central heating system, as well as the solar heating connections are provided at such heights that they do not allow for maximum utilization rate of a particular heating medium.

Document WO-A97/41395 describes a low temperature heating system with a heat recovery device which transfers ambient or solar energy through a fluid heat transfer medium, particularly at least one solar collector and a hot water boiler with at least one furnace. The invention is characterized by the fact that the inner chamber of the boiler is subdivided vertically into three zones, namely into a middle heating zone in which at least one furnace is located, into a service water zone above the heating zone, in which a heat exchanger for transferring heat between the hot water and the service water system is located, and into a pre-heating zone located underneath the heating zone, in which the hot water can be heated by means of the heat gained from the heat recovery device.

The supplementary heating element, such as the electric heater In the existing solutions, is usually mounted at such spot that it prevents reasonable utilization rate of a single part of the furnace only (e.g, only for sanitary water heating), but also heats other water in the furnace, thus causing additional energy loss and, as a consequence, higher consumption.

The deficiency of the known central heating combustion chambers also lies in the fact that they do not provide for optimum and smooth flow of the flame that accordingly cannot heat all water-filled surfaces. Therefore such furnaces contain special water-cooled surfaces that serve for leading the flame and the smoke gases that transmit the heat to the heating water. Such water-cooled surfaced mostly cause some worse draught of the furnace, which is particularly reflected both in the utilization rate of the furnace and in the environment pollution.

The central heating system for premises and sanitary water that includes a combined central heating furnace with two combustion chambers, as provided in this invention, consists of a furnace with a boiler 1, on top provided with an immersive heat accumulator 2 and/or sanitary water boiler with three specially shaped connections 2a, 2b, 2c, as well as provided with an electric heating element 3; the boiler 1 contains two cylindrical combustion chambers an upper combustion chamber 4 and a lower combustion chamber 5 and the furnace is connected through the solar system pipe branching 7 to the solar energy receiver system 8 as well as to the combined expansion tank 9 with the compressed-air compensation duct 10, while the upper combustion chamber 4 may contain an adjustable ejector-type attachment 11, an adjustable chimney insert 12 and a detachable spiral insert 13, the lower combustion chamber 5 is so mounted that it can be detached and replaced by an accumulator-type insert 6.

The invention will be explained in detail on the basis of the concrete example and the pictures whereof:
- **Figure 1**: shows the central heating system for premises and sanitary water with a combined central heating furnace presented as a cross-section, included in the central heating system;
- **Figure 2**: shows the combined central heating furnace including two combustion chambers and the alternative mounting of an accumulation-type exchangeable insert according to the invention;

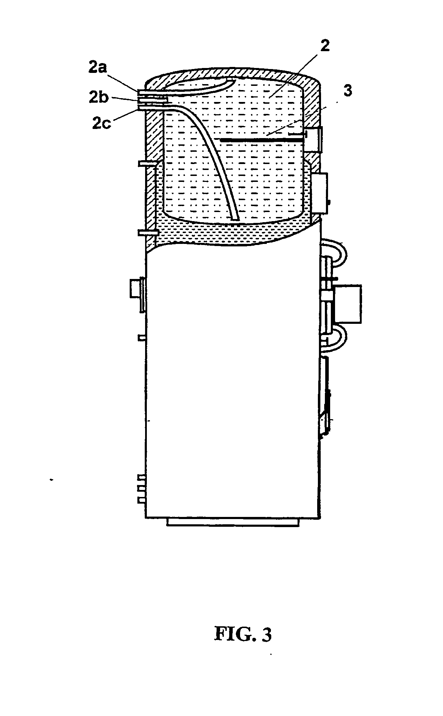

- **Figure 3**: shows the combined central heating furnace with an improved heat accumulator - sanitary water boiler;
- **Figure 4**: shows the pipe branching leading to/from the solar energy receivers;

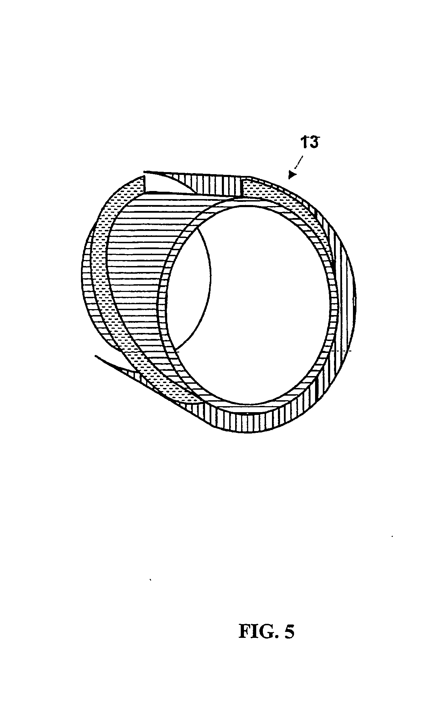

- **Figure 5**: shows the spiral insert for boilers;

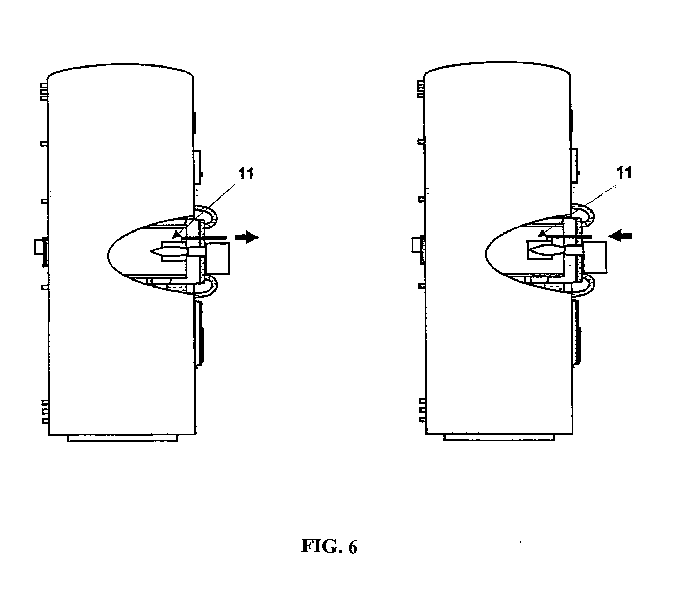

- **Figure 6**: shows the external sides of the adjustable ejector atachment;

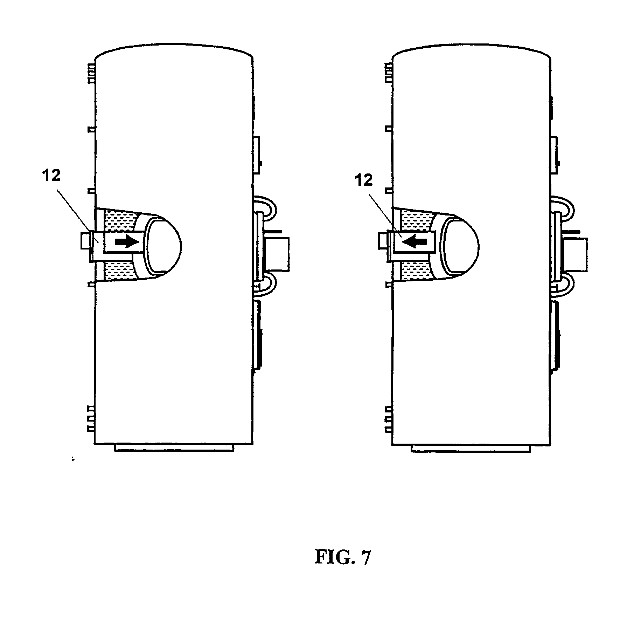

- **Figure 7**: shows the adjustable chimney insert.

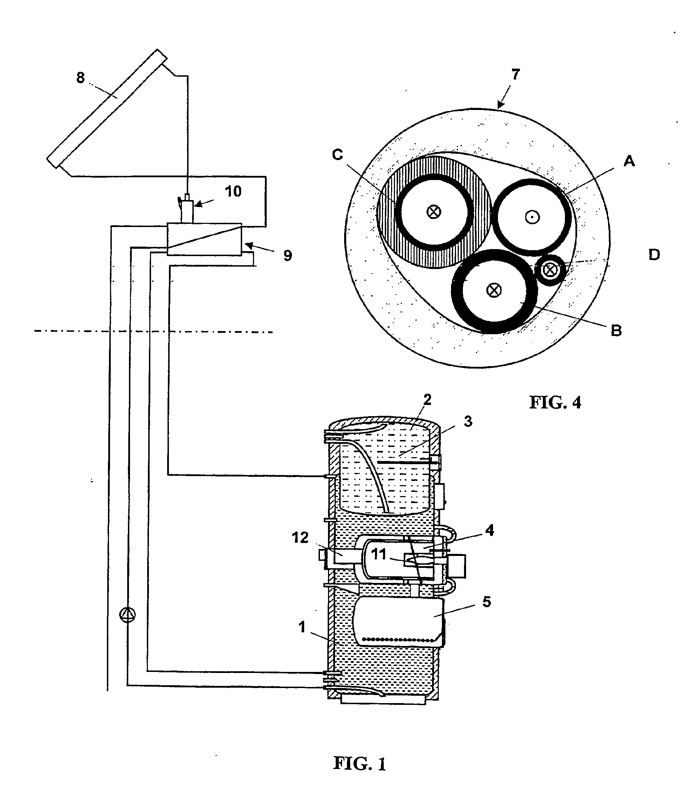

The central heating system for premises and sanitary water, as provided in this invention, with a combined central heating furnace presented as a cross-section, included in the central heating system, is shown in Figure 1. The basic form of the furnace includes a cylindrical boiler 1 whereof the size depends on the envisaged power. On top the boiler 1 is provided with an immersive heat accumulator 2 and/or sanitary water boiler with three specially shaped connections 2a, 2b, 2c, as well as provided with an electric heating element 3 for supplementary sanitary water heating and/or provision of heated sanitary water whenever the whole furnace is out of operation.

The boiler 1 contains two combustion chambers an upper combustion chamber 4 and a lower combustion chamber 5 the upper intended for combustion of liquid or gaseous fuels and the lower for combustion of the biological fuel. The upper combustion chamber 4 and the lower combustion chamber 5 are of cylindrical shape, which provides for good heat convection in the furnace. The cylindrical shape has been selected in order to minimize internal tensions in the material - the stainless sheet metal. The stainless sheet metal guarantees long-term operation of the furnace without any technological corrections. The cylindrical shape of the combustion chambers allows for easy and thorough cleaning. The lower combustion chamber 5 for combustion of the biological fuel also includes a detachable grid 5a that shall be removed whenever we stop using the biological fuel and we choose to use the accumulator-type exchangeable insert 6.

The inner side of the cover is provided with a routing valve intended for routing the primary combustion air under the combustion grid. When mounting the accumulation-type exchangeable insert 6 the detachable valve shall be removed.

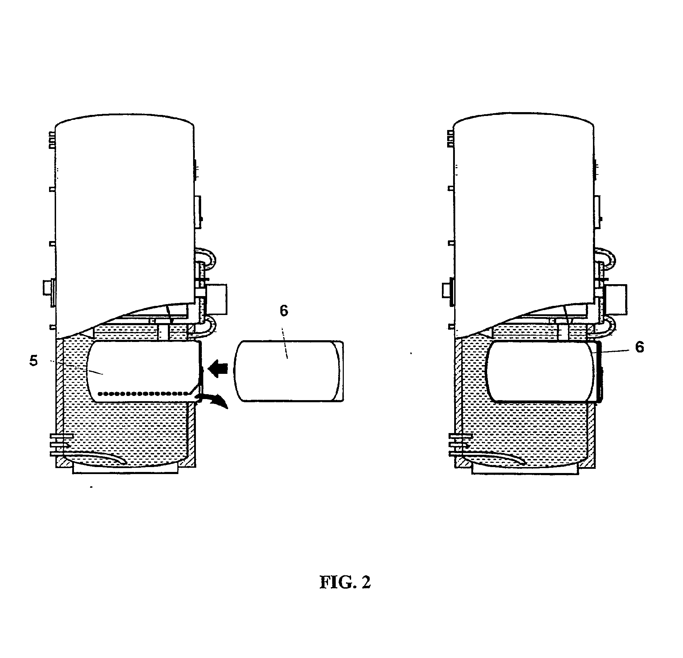

In the central part of the boiler 1 there is mounted - perpendicularly to the main axle of boiler 1 - the basic combustion chamber 4, of cylindrical shape, for liquid or gaseous fuels, while the lower combustion chamber 5. intended for heating with solid fuels and/or biological fuel is mounted below it and can alternatively be replaced by an accumulation-type exchangeable insert 6. as shown in Figure 2.

The combined central heating furnace is connected through the solar system pipe branching 7 to the solar energy receiver system 8 as well as to the combined expansion tank 9 with the compressed-air compensation duct 10.

In view of better utilization rate and lower pollution, the upper combustion chamber 4 contains an externally adjustable ejector-type attachment 11, an adjustable chimney insert 12 for routing the exit of exhaust gases into the chimney, as well as a detachable spiral insert 13 for re-routing the exhaust gases.

The accumulation-type exchangeable insert 6 is designed for the period when the heat is not derived from biological fuel. It is very useful to use solar energy and the accumulation-type exchangeable insert 6 at a time, which adds to the total mass of the heat carrier (water). The water, provided with higher specific heat than the air, absorbs the heat at the time of its intensive production and accumulates it accordingly. Intensive and excessive heat production takes place at intensive solar radiation when the heat absorption exceeds its consumption. The accumulated heat provides for compensation of thermal oscillations between the production and the consumption. More accumulated heat contributes to higher utilization rate of the furnace and in particular of the entire heating system. A furnace provided with such insert takes priority over traditional central heating furnaces.

The accumulation-type exchangeable insert 6 is made of stainless steel metal, is of cylindrical shape and fits snuggly into the cylindrical combustion chamber of the central heating furnace for premises and sanitary water. Appropriate mounting of the accumulation-type exchangeable insert 6 results in a minimum air gap, which guarantees good passage of the heat from the heat carrier in the central heating furnace to the heat carrier in the accumulation-type exchangeable insert 6. The latter is insulated at the front, which prevents from thermal loss into the environment.

The accumulation-type exchangeable insert 6 shall get filled with the accumulation liquid (water) only when mounted in its place. In this way we avoid any moving of heavy burdens. Its mounting meets all ergonomic requirements for user-friendly and safe handling. There is only one way of mounting where all mistakes are excluded.

The immersive heat accumulator 2 and/or the boiler is immersed into the upper part of the boiler 1. The size and the shape of the heat accumulator 2 are adjusted and optimized to the boiler. The mounting of the heat accumulator 2 provides for optimum supplementary heating of sanitary water as well as for harmonized monitoring of the heated sanitary water consumption. The depth of the immersion of the heat accumulator 2 into the boiler 1 is adjusted to the optimum hot sanitary water consumption, depending on the built-in materials and the thermal power of the boiler 1. The share of the heat accumulator that makes contact with the primary heating water in the boiler 1 is adjusted to the intensity of the heat passage from the heat carrier in the central heating system through the heat accumulator 2 wall to the heated sanitary water. Partial immersion of the heat accumulator 2 into the boiler 1 refrains from excessive heat emission in case of intensive sanitary water consumption on account of dynamic responses with reference to the whole heating system referred to in this invention.

The heat accumulator 2 is immersed into the boiler 1 for 45% of the height of the heat accumulator. The surface of the heat accumulator that makes contact with the primary water in the boiler 1 is adjusted to the required quantity of heat that passes from the boiler 1 into the heat accumulator 2. The 45 % immersion is adjusted to the intensity of the convection that occurs at usual sanitary water consumption at normal heating of one-family houses.

The heat accumulator 2 is of cylindrical shape that minimizes internal tensions in the material - stainless sheet metal. Stainless sheet metal guarantees long-term operation.

On the cladding - under the top of the heat accumulator, there are three connections 2a, 2b and 2c, that continue internally into pipes as follows:
- The connection 2a continues into the pipe that leads under the top of the heat accumulator for release of hot sanitary water (the pipe is slightly curved and ends closely below the top of the heat accumulator - 10 mm gap).
- The connection 2b continues into the pipe that leads directly into the heat accumulator for connection of the circulation duct (with low circulation intensity due to small differences in height and in turn due to low temperature differences in the circulation duct - low hot sanitary water circulation intensity and thereby low thermal losses in the walls of the house).
- The connection 2c continues into the pipe that leads to the bottom of the heat accumulator for supply of cold sanitary water (the pipe is sharply curved and ends slightly above the bottom of the heat accumulator -10 mm gap).

With intensive hot sanitary water consumption, cold water enters at a uniform pace and fills the heat accumulator 2 in layers. Such filling involves little mixing of hot and cold water, which provides for hot sanitary water consumption by charges.

The 55% height of the heat accumulator 2, that is not immersed into the boiler, is surrounded by a 120 mm insulating layer that prevents from the loss of the heat of the already heated sanitary water.

The pipes mounted in the pipe branching 7 and shown in Figure 4, that lead to/from solar energy receivers 8, are made from copper, have different diameters and different thermal insulation. The pipe branching 7 of the inflow and outflow pipes system is tied into a sheath for two reasons. The first reason: easier and more solid mounting, the second reason: recuperative effect of the pipe branching 7. The emitted heat is received by a cold pipe that pre-heats the heat carrier and contributes to the final utilization rate of the entire system. Thus the pipe branching 7 includes four pipes as follows:
- Pipe A, leading from the boiler 1 towards the solar energy receivers 8, internal pipe diameter 13 mm, non-insulated pipe;
- Pipe B, leading from the solar energy receivers 8 towards the boiler 1, internal pipe diameter 13 mm, cladded, partly insulated pipe;
- Pipe C of the circulation duct, connecting the top of the heating part of the furnace and the lower part of the expansion tank 9, internal pipe diameter 4 mm, insulated pipe;
- Pipe D of the flow duct, pipe diameter 12 mm, non-insulated pipe.

By using minimum insulation we provide for pre-heating of the water that is directed towards solar energy receivers 8. The entire pipe branching 7 is separated from the environment with additional insulation.

Due to reliable insulation of the pipe branching 7, the risk of heat loss in the rising cool heat carrier is additionally prevented. The warm pipe contains sufficient hot heat carrier that emits the heat on its way to the furnace, thereby pre-heating the heat carrier traveling into the solar energy receivers 8.

The tiniest pipe C provides for compressed-air compensation and functions at the same time as a circulation duct supplying the air-compression tank with minimum gravitation flow. The medium flowing along the tiniest pipe C maintains positive temperatures in the thermally exposed expansion tank 9. Airing of the boiler 1 also uses the pipe branching 7 of the solar system.

The combined expansion tank 9 is adapted for use in the heating system referred to in this invention. The expansion tank 9 is of open type, providing for generation of the pressure in the heating system, for accumulation of the withdrawing water from the solar and from the heating systems, and functioning as an overheating valve. It is mounted at least 500 mm above the upper level of the highest heater and at least 200 mm under the lowest level of solar energy receivers 8. The pump drives the water through solar energy receivers 8 and transports it through the combined expansion tank 9, wherefrom the water returns back into the boiler 1 of the central heating furnace referred to in this invention.

The combined expansion tank 9 is open, provided on top with a compressed-air compensation opening. Airing of the whole system is simplified and no special airing valve is needed. The combined expansion tank 9 is designed for compressed-air compensation in the solar and heating systems. The heat carrier is integral and flows through the solar and the heating systems.

The safety overflow pipe 10 is connected to the combined expansion tank 9 immediately under its cover. The pipe leads from the expansion tank into the cellar of the building wherefrom it is routed to the outflow. When filling the system with the heat carrier - the water, the level rises until it attains the overflow duct. The excessive liquid passes over the overflow duct and indicates that the system is filled with the heat carrier. The operation of a combined expansion tank 9 requires no additional power supply. The water circulates in the system by means of a system pump that lies close to the central heating furnace.

In case of power failure and/or idle run, the danger of excessive pressure due to system overheating is avoided. Increased volume (evaporation at idle run) would lead to compressed-air increase above the pressure of the environment. In this version of the open tank such risk is avoided because the pressure is compensated through the overflow duct and through the airing pipe (pipe attachment on the top of the combined expansion tank 9. In case of water evaporation, vapour may exit through the expansion tank 9. The combined expansion tank 9 is provided with a circulation duct connection on its lower part. The pipe link in combination with the reverse duct from the solar system provides for minimum gravitation flow of the heat carrier through the expansion tank 9, at the same time providing for airing of the boiler.

The flow guarantees the heating of the expansion tank 9 even during the most unfavourable weather conditions - low temperatures around the expansion tank 9. Due to this specific characteristic there can not come to any water freezing that could prevent from smooth system operation. Water tends to withdraw from the solar system whenever the circumstances for heat rising turn out unfavourable (no solar radiation, low temperatures, temperatures in solar energy receivers 8, lower temperatures in the boiler 1 etc.). The secured positive temperature difference provides for system operation under favourable conditions, which in turn indirectly increases the utilization rate of the total system operation.

On the top of the combined expansion tank 9, there is the connection 10 for the pipe along which water flows from solar energy receivers 8. This water that enters the combined expansion tank 9, fills it and subsequently descends along a reverse pipe towards the bottom of a central heating furnace. As it is a complex system with high dynamics, underpressure may occur at a particular moment due to oscillations of water level in the expansion tank 9. In such case it may occur that due to the developed subpressure the walls of the expansion tank 9 may suffer deformation. The airing pipe provides a capillary link of the system with the environment and secures random compressed-air compensation.

On the top of the expansion tank, there is the pipe for connection of the reverse duct from solar energy receivers 8. At the connection point, the pipe diameter is 12 mm and subsequently it extends to 14 mm. The airing pipe is mounted on the extended part of the pipe under an acute angle (10° with reference to the vertical). The internal diameter of the pipe measures 4 mm and provides capillary connection of the system with the environment. The connection is necessary for compressed-air compensation at extremely fast system filling and discharging (fast circulation of the heat carrier in the system). The capillary pipe provides for additional airing during the system filling itself.

At fast system discharge it is necessary to provide for direct compressed-air compensation in the expansion tank 9. This compensation is effected through the capillary pipe and the overflow pipe. The pipe provides for fast enough compressed-air compensation even in case of extremely fast system discharging, which secures undisturbed discharging.

If the air happens to enter the system at any point, automatic airing through the capillary pipe and the overflow pipe takes place on return from the solar energy receivers 8, when the water returns into the system. As during the passage through the expansion tank 9 the reverse current slows down, this is the first opportunity for system airing.

In view of intensive discharge of the heat generated in the boiler 1 it is necessary to provide for appropriate design of the combustion chamber 4 and of smoke channels. The fire from the burner is directed towards the rear wall of the cylindrical combustion chamber 4. It turns against the rear wall and exits against the flow through a circular gap towards the door of the furnace. The door of the furnace is exposed to heat and is accordingly, water-cooled. The heat emitted to the door by exhaust gases passes to the heat carrier that enters the heating system. The exhaust gases entering the circular gap between the combustion chamber and the furnace get directed, due to the inserted spiral insert 13, tangentially to the combustion chamber.

The spiral insert 13 provides for rerouting of exhaust gases tangentially to the combustion chamber. The cross flow established between exhaust gases and the heat carrier in the boiler provides for the maximum thermal transmittivity. In case of absence of the spiral insert 13 the heat spreads in layers, which results in lower heating of the heat carrier due to lower thermal transmittivity.

The spiral insert 13 fits snuggly into the circular gap between the external cladding of the boiler 1 and the internal cladding of the furnace. The spiral insert 13 extends up to the vertical link between the upper combustion chamber 4 and the rest of the furnace. The spiral insert 13 is detachable and may be removed whenever required, in order to clean the circular exhaust gas channel.

At combustion of liquid and solid fuels, the burning products leave the combustion chamber in the form of non-burned particles. If providing for hot direct burning-process environment, we thereby provide additional thermal power that intensifies the burning of the incoming fuel. By inserting the ejector attachment 11 we provide for absorption of additional surrounding air in the direct burning process. Due to more intensive burning and due to higher burning temperatures, the process is manifested as a blue flame. In order to obtain a blue flame it is necessary to create appropriate burning conditions influenced by the selection of the fuel injection nozzle and by the correct position of the ejector attachment 11.

Therefore the ejector attachment 11 is adjustable from the outer side of the boiler. The support of the guide for the ejector attachment 11 is mounted on the water-cooled cast-iron door of the upper combustion chamber 4. The guide including the ejector attachment 11 is adjustable along the depth of the upper combustion chamber 4. The setting of the ejector attachment 11 may undergo optimization during the very operation of the boiler 1.

The ejector attachment 11 provides for adjustment to optimum burning conditions for different starting conditions. In this context the starting condition denotes in particular the application of different types of burners and/or different nozzle diameters.

The guide of the ejector attachment 11 is suitable for guiding the guide from the outer side of the boiler 1 - even during the operation of the burner. Thereby the attachment allows for adjustment of the attachment to the depth and to the intensity of the flame, thermal power and uniform heat distribution within the upper combustion chamber 4. The ejector attachment 11 is of universal type and may match particular construction components.

At the discharge of exhaust gases it is necessary to provide for adequate emission of the respective heat to the walls of the boiler and to the heat carrier contained in the boiler itself. Exhaust gases leaving the combustion chamber tangentially exit into the chimney at the back of the furnace. The adjustable chimney insert 12 is mounted at the back of the combustion chamber; it is mobile and adjustable along the axis

The adjustable chimney insert 12 is made of stainless sheet metal and it serves for routing the exiting exhaust gases into the chimney. Due to the mounted chimney insert 12 the exhaust gases are forced to exit from the bottom of the upper combustion chamber 4. The longer travelled way by the exiting exhaust gases contributes to an increased integral heat emission to the heat carrier in the boiler, which in turn increases the utilization rate of the boiler.

The insert 12 may also be removed in order to enable easy and thorough cleaning of burning residuals. The chimney insert 12 is shaped as a sheet metal pipe with 1/3 of the pipe cladding open at the bottom side. The insert 12 forms the cladding of the pipe that from the upper side prevents from direct access of exhaust gases from the boiler into the chimney. The two-thirds limitation from the upper side causes some forced counter-gravitation flow of exhaust gases that have tn enter the chimney from the lower 1/3 open side. The prolonged way of exhaust gases causes additional cooling down and heat emission to the heat carrier in the system (water).

Furthermore, the adjustable chimney insert 12 also provides for draught control. In case of insufficient draught, the chimney insert 12 can be removed from the back wall of the upper combustion chamber 4 in order to release direct passage to exhaust gases. The resistance to the flow of exhaust gases is reduced and the direct flow is more intensive due to lower resistances.

The adjustable chimney insert 12 may be removed and pulled out through the exhaust pipe (at tho back of the boiler), which provides for easier cleaning.

## Claims

1. A central heating system for permises and sanitary water, consisting of furnace with boiler (1), provided on top with an immersive heat accumulator (2) or sanitary water boiler with three specially shaped connections (2a,2b,2c), as well as provided with an electric heating element (3), whereby the furnace is connected through a solar system pipe branching (7) to a solar energy receiver system (8) as well as to a combined expansion tank (9) with a compressed air compensation duct (10),
**characterized in that**,
the central heating system consists of a boiler (1) with an upper (4) combustion chamber a lower (5) combustion chamber and an accumulator-type insert, said lower combustion chamber being adapted to be alternatively replaced with said accumulator-type insert (6) which is filled with accumulation liquid and has a cylindrical shape that fits snuggly to the cylindrical shape of the lower (5) combustion chamber.

2. The central heating system for premises and sanitary water, in accordance with Claim 1,
**characterized in that**
the heat accumulator (2) is of immersive type, immersed by 45% of its height into the upper part of the boiler (1) and through the connections (2a,2b,2c) connected to the system, whereby the connection (2a) continues into the pipe that leads under the top of the heat accumulator (2), is slightly curved and ends closely below the top of the heat accumulator with a 10 mm gap, the connection (2b) continues into the pipe that leads directly into the heat accumulator (2) for connection of the circulation duct and the connection (2c) continues into the pipe that leads to the bottom of the heat accumulator (2), is sharply curved and ends slightly above the bottom of the heat accumulator (2) - 10 mm gap.

3. The central heating system for premises and sanitary water, in accordance with Claim 1,
**characterized in that**
the pipes linking the boiler (1) of the furnace and the solar energy receivers (8) are mounted in the pipe branching (7), have different diameters and different thermal insulation: pipe (A), leading from the boiler (1) towards the solar energy receivers (8), has the internal pipe diameter 13 mm and is non-insulated; pipe (B), leading from the solar energy receivers (8) towards the boiler (1), has the internal pipe diameter 13 mm, is clad and thereby partly insulated; pipe (C) of the circulation duct, connecting the top of the heating part of the furnace and the lower part of the expansion tank (9), has the internal pipe diameter 4 mm and is insulated; pipe (D) is not insulated.

4. The central heating system for premises and sanitary water, in accordance with Claims 1 and 4,
**characterized in that**
the pipe branching (7) also serves for airing of the boiler (1).

5. The central heating system for premises and sanitary water, in accordance with Claim 1,
**characterized in that**
the combined expansion tank (9) is of open type and is mounted at least 500 mm above the upper level of the highest heater and at least 200 mm under the lowest level of solar energy receivers (8) and immediately under its cover there is connected the safety flow pipe, while on the bottom side there is the connection for the circulation duct that provides for airing of he boiler (1).

6. The central heating system for premises and sanitary water, in accordance with Claims 1 and 6,
**characterized in that**
on the top of the expansion tank, there is the pipe for connection of the return duct from solar energy receivers (8), at the connection point with the pipe diameter of 12 mm and subsequently extending to 14 mm and that the airing pipe is mounted on the extended part of the pipe under an acute angle - 10° with reference to the vertical -, that its internal diameter measures 4 mm and provides capillary connection of the system with the environment, as well as that it provides for additional airing at the system filling itself.

7. The central heating system for premises and sanitary water, in accordance with Claim 1,
**characterized in that**
the furnace contains a detachable spiral insert (13) that fits snuggly into the circular gap between the external cladding of the boiler (1) and the internal cladding of the furnace as well as that it extends up to the vertical link between the upper combustion chamber (4) and the rest of the furnace.

8. The central heating system for premises and sanitary water, in accordance with Claim 1,
**characterised in that**
the upper combustion chambers (4) is provided from the outer side of the boiler with an adjustable ejector attachment (11) in the way that the support of the guide for the ejector attachment (11) is mounted on the water-cooled cast-iron door of the upper combustion chamber (4) and the guide including the ejector attachment (11) is adjustable along the depth of the upper combustion chamber (4).

9. The central heating system for premises and sanitary water, in accordance with Claim 1,
**characterized in that**
at the back of the upper combustion chamber (4) there has been mounted, adjustably along the axis the chimney insert (12) in the form of a sheet metal pipe with one-third of the pipe cladding open at the bottom side, whereby the insert (12) forms the cladding of the pipe that from the upper side prevents from direct access of exhaust gases from the boiler into the chimney, while the two-thirds limitation from the upper side causes some forced counter-gravitation flow of exhaust gases that have to enter the chimney from the lower one-third open side.

## Patentansprüche

1. Zentralheizungsanlage für Gebäude und Sanitärwasser umfassend einen Ofen mit einem Boiler (1), der am oberen Ende mit einem Tauch-Wärmespeicher (2) versehen ist, oder mit einem Boiler für Sanitärwasser mit drei speziell geformten Anschlüssen (2a, 2b, 2c), sowie mit einem elektrischen Heizungselement (3) versehen ist, wobei der Ofen durch eine Rohrabzweigung (7) einer Solarheizungsanlage mit einer Solarheizungsaufnahmeanlage (8) sowie einem kombinierten Ausdehnungsgefäß (9) mit einer Druckluft-Ausgleichsleitung (10) verbunden ist, **dadurch gekennzeichnet, dass** die Zentralheizungsanlage einen Boiler (1) mit einer oberen Brennkammer (4), einer unteren Brennkammer (5) und einem speicherartigen Einsatz umfasst, wobei die untere Brennkammer angepasst ist, um alternativ mit dem genannten speicherartigen, mit einer Speicherflüssigkeit abgefüllten und eine zylindrische Form aufweisenden, in seiner zylindrischen Form der unteren (5) Brennkammer gut anpassenden Einsatz (6) ersetzt zu werden.

2. Zentralheizungsanlage für Gebäude und Sanitärwasser nach Anspruch 1, **dadurch gekennzeichnet, dass** der Wärmespeicher (2) ein Immersionswärmespeicher ist, der mit 45% seiner Höhe in den oberen Teil des Boilers (1) eingetaucht ist und durch Anschlüsse (2a, 2b, 2c) an die Anlage angeschlossen ist, wobei sich der Anschluss (2a) in die unter das obere Ende des Wärmespeichers (2) führende Leitung erstreckt und ein wenig kurvenförmig ist und genau unter dem oberen Ende des Wärmespeichers mit einem Abstand von 10 mm beendet, der Anschluss (2b) erstreckt sich in eine Leitung, die unmittelbar in den Wärmespeicher (2) zur Verbindung mit einer Kreislaufrohrleitung führt, und der Anschluss (2c) erstreckt sich in eine unter das untere Ende des Wärmespeichers (2) führende Leitung, die scharf kurvenförmig ist und ein wenig oberhalb des unteren Endes des Wärmespeichers (2) mit einem Abstand von 10 mm beendet.

3. Zentralheizungsanlage für Gebäude und Sanitärwasser nach Anspruch 1, **dadurch gekennzeichnet, dass** die den Boiler (1) der Ofen und die Solarheizungsaufnahmeanlage (8) verbindenden Leitungen in einer Rohrabzweigung (7) angeordnet sind, verschiedene Durchmesser und verschiedene Wärmeisolation aufweisen: die Leitung (A), die vom Boiler (1) zur Solarheizungsaufnahmeanlage (8) führt, weist einen Innendurchmesser der Leitung von 13 mm auf und ist nicht isoliert; die Leitung (B), die von der Solarheizungsaufnahmeanlage (8) zum Boiler (1) führt, weist einen Innendurchmesser der Leitung von 13 mm auf, ist verkleidet und damit teilweise isoliert; die Leitung (C) der Kreislaufrohrleitung, die das obere Ende des Heizungsabschnitts der Ofen und das untere Ende des Ausdehnungsgefäßes (9) verbindet, hat einen Innendurchmesser der Leitung von 4 mm und ist nicht isoliert; die Leitung (D) ist nicht isoliert.

4. Zentralheizungsanlage für Gebäude und Sanitärwasser nach Anspruch 1 und 4, **dadurch gekennzeichnet, dass** die Rohrabzweigung (7) auch zur Lüftung des Boilers (1) dient.

5. Zentralheizungsanlage für Gebäude und Sanitärwasser nach Anspruch 1, **dadurch gekennzeichnet, dass** das kombinierte Ausdehnungsgefäß (9) von einem offenen Typ ist und mindestens 500 mm oberhalb der obersten Ebene des höchsten Heizers und mindestens 200 mm unterhalb der untersten Ebene der Solarheizungsaufnahmeanlage (8) befestigt ist und unmittelbar unter seiner Decke mit einer Sicherheitsvorlaufleitung verbunden ist; an der unteren Seite befindet sich eine Verbindung für die zur Lüftung des Boilers (1) dienenden Kreislaufrohrleitung.

6. Zentralheizungsanlage für Gebäude und Sanitärwasser nach Anspruch 1 und 6, **dadurch gekennzeichnet, dass** sich am oberen Ende des Ausdehnungsgefäßes eine Leitung zur Verbindung der Rückrohrleitung aus der Solarheizungsaufnahmeanlage (8) an der Verbindungspunkt mit einem Rohrdurchmesser von 12 mm und danach 14 mm befindet, und dass die Lüftungsleitung am verlängerten Abschnitt der Leitung unter einem scharfen Winkel von -10° hinsichtlich der Vertikale befestigt ist, dass ihr Innendurchmesser 4 mm beträgt und zur kapillaren Verbindung der Anlage mit der Umwelt, sowie zur zusätzlichen Lüftung beim Befüllen der Anlage dient.

7. Zentralheizungsanlage für Gebäude und Sanitärwasser nach Anspruch 1, **dadurch gekennzeichnet, dass** der Ofen einen lösbaren schneckenförmigen Einsatz (13) umfasst, der genau in den kreisförmigen Raum zwischen der Außenverkleidung des Boilers (1) und der Innenverkleidung der oberen Brennkammer (4) passt und sich bis zur senkrechten Verbindung zwischen der oberen Brennkammer (4) und dem Rest des Ofens erstreckt.

8. Zentralheizungsanlage für Gebäude und Sanitärwasser nach Anspruch 1, **dadurch gekennzeichnet, dass** die obere Brennkammer (4) an der Außenseite des Boilers mit einem einstellbaren Ejektoransatz (11) versehen ist, so dass die Abstützung der Führung für den Ejektoransatz (11) an der wassergekühlten gusseisernen Tür der oberen Brennkammer (4) befestigt ist und die den Ejektoransatz (11) umfassende Führung entlang der Tiefe der oberen Brennkammer (4) einstellbar ist.

9. Zentralheizungsanlage für Gebäude und Sanitärwasser nach Anspruch 1, **dadurch gekennzeichnet, dass** an der Rückseite der oberen Brennkammer (4) ein entlang der Achse einstellbarer Rauchfangeinsatz (12) in Form eines Blechrohrs und mit einem Drittel der an der unteren Seite geöffneten Rohrverkleidung angebracht ist, wobei der Einsatz (12) die Verkleidung des Rohres bildet, die von der oberen Seite einen direkten Eintritt von Abgasen aus dem Boiler in den Rauchfang verhindert, während eine Zweidrittelbegrenzung von der oberen Seite einen gewissen gezwungenen Gegengravitations-Ablauf von Rauchgas, das in den Rauchfang aus der unteren ein Drittel geöffneten Seite eintreten muss, verursacht.

## Revendications

1. Un système de chauffage central pour locaux et eau chaude sanitaire composé d'une chaudière avec un chauffe-eau (1) alimenté par le haut par un accumulateur de chaleur à immersion (2) ou un chauffe-eau sanitaire doté de trois raccords de forme spéciale (2a, 2b, 2c), également alimenté par un élément de chauffage électrique (3), la chaudière étant raccordée par un tuyau de raccordement de système solaire (7) à un système de captage de l'énergie solaire (8) ainsi qu'à un vase d'expansion combiné (9) avec une conduite de compensation à air comprimé (10), **caractérisé en ce que** le système de chauffage central comporte un chauffe-eau (1) avec une chambre de combustion supérieure (4), une chambre de combustion inférieure (5) et un insert de type accumulateur, ladite chambre de combustion inférieure étant adaptée pour pouvoir être remplacée par ledit insert de type accumulateur (6) qui est rempli de fluide d'accumulation et a une forme cylindrique qui s'adapte exactement à la forme cylindrique de la chambre de combustion inférieure (5).

2. Le système de chauffage central pour locaux et eau sanitaire selon la revendication 1, **caractérisé en ce que** l'accumulateur de chaleur (2) est à immersion, plongé à 45 % de sa hauteur dans la partie supérieure du chauffe-eau (1) et relié au système par les raccords (2a, 2b, 2c), où le raccord (2a) est prolongé par le tuyau qui mène sous le sommet de l'accumulateur de chaleur (2), est légèrement courbé et se termine juste en dessous du sommet de l'accumulateur de chaleur avec un espace libre de 10 mm, le raccord (2b) est prolongé par le tuyau qui mène directement à l'intérieur de l'accumulateur de chaleur (2) pour le raccordement de la conduite de circulation, et le raccord (2c) se poursuit par le tuyau qui mène au bas de l'accumulateur de chaleur (2), est fortement courbé et se termine légèrement au-dessus du bas de l'accumulateur de chaleur (2) avec un espace libre de 10 mm.

3. Le système de chauffage central pour locaux et eau chaude sanitaire selon la revendication (1), **caractérisé en ce que** les tuyaux reliant le chauffe-eau (1) de la chaudière aux capteurs d'énergie solaire (8) sont montés dans le raccordement du tuyau (7), et ont des diamètres différents et des isolations différentes : le tuyau (A) allant du chauffe-eau (1) aux capteurs d'énergie solaire (8), a un diamètre interne de 13 mm et n'est pas isolé ; le tuyau (B) allant des capteurs d'énergie solaire (8) au chauffe-eau (1) a un diamètre interne de 13 mm, il est gainé et donc partiellement isolé ; le tuyau (C) de la conduite de circulation qui relie le sommet de la partie chauffante de la chaudière à la partie inférieure du vase d'expansion (9) a un diamètre interne de 4 mm et est isolé ; le tuyau (D) n'est pas isolé.

4. Le système de chauffage central pour locaux et eau sanitaire selon les revendications 1 et 4, **caractérisé en ce que** le raccordement du tuyau (7) sert également à l'aération du chauffe-eau (1).

5. Le système de chauffage central pour locaux et eau sanitaire selon la revendication 1, **caractérisé en ce que** le vase d'expansion combiné (9) est de type ouvert et est monté au moins 500 mm au-dessus du niveau supérieur du chauffage le plus haut et au moins 200 mm au-dessous du niveau inférieur des capteurs d'énergie solaire (8), un tuyau d'écoulement de sécurité étant raccordé immédiatement sous son couvercle, tandis que le côté inférieur est doté d'un raccord pour la conduite de circulation alimentant le chauffe-eau en air (1).

6. Le système de chauffage central pour locaux et eau sanitaire selon les revendications 1 et 6, **caractérisé en ce que** le sommet du vase d'expansion est doté d'un raccord pour la conduite de retour des capteurs d'énergie solaire (8); de 12 mm de diamètre au point de raccordement avec le tuyau et s'élargissant ensuite à 14 mm, et **en ce que** le tuyau d'aération est monté sur la partie élargie du tuyau selon un angle aigu de -10° par rapport à la verticale, que son diamètre interne est de 4 mm et qu'il assure un raccordement capillaire du système avec l'environnement, et qu'il assure également une aération supplémentaire au niveau du remplissage du système lui-même.

7. Le système de chauffage central pour locaux et eau sanitaire selon la revendication 1, **caractérisé en ce que** la chaudière contient un insert hélicoïdal amovible (13) qui se place exactement dans l'espace circulaire entre l'enveloppe du chauffe-eau (1) et l'enveloppe interne de la chaudière, et **en ce qu'**il s'élargit vers le haut jusqu'à la liaison entre la chambre de combustion supérieure (4) et le reste de la chaudière.

8. Le système de chauffage central pour locaux et eau sanitaire selon la revendication 1, **caractérisé en ce que** la chambre de combustion supérieure (4) est alimentée depuis l'extérieur du chauffe-eau par une fixation d'éjecteur réglable (11) de sorte que le support du guide de la fixation de l'éjecteur (11) est monté sur la porte en fonte à refroidissement par eau de la chambre de combustion supérieure (4) et le guide comportant la fixation de l'éjecteur (11) est réglable le long de la profondeur de la chambre de combustion supérieure (4).

9. Le système de chauffage central pour locaux et eau sanitaire selon la revendication 1, **caractérisé en ce qu'**à l'arrière de la chambre de combustion supérieure (4), l'insert de cheminée (12) a été monté de façon réglable sous la forme d'un tuyau de tôle dont le tiers inférieur de la gaine est ouvert, où l'insert (12) forme la gaine du tuyau qui empêche l'accès direct depuis le haut des gaz d'échappement du chauffe-eau dans la cheminée, tandis que les deux-tiers supérieurs du tuyau provoquent un flux de fumées opposé à la gravitation, lequel doit entrer dans la cheminée par le tiers ouvert du côté inférieur.
